# EUROPÄISCHE PATENTSCHRIFT

(11) **EP 1 503 580 B1**
(45) Veröffentlichungstag und Bekanntmachung des Hinweises auf die Patenterteilung: **11.01.2006**
(21) Anmeldenummer: 04013000.7
(22) Anmeldetag: 02.06.2004
(51) Int. Cl.: H04N 5/33, H04N 9/04

(54) **Sensoranordnung mit einer Mehrzahl von Typen optischer Sensoren**
Sensor arrangement including a plurality of sensor types
Dispositif de capteur comportant une pluralité de capteurs de types differents

(30) Priorität: 30.07.2003 DE 10335190
(43) Veröffentlichungstag der Anmeldung: 02.02.2005
(73) Patentinhaber: DaimlerChrysler AG, 70567 Stuttgart (DE)
(72) Erfinder: Eggers, Helmuth, Dr.-Ing., 89077 Ulm (DE); Kurz, Gerhard, Dipl.-Ing., 73240 Wendlingen (DE); Seekircher, Jürgen, Dr.-Ing., 73760 Ostfildern (DE); Wohlgemuth, Thomas, Dipl.-Ing., 72631 Aichtal (DE)

(56) Entgegenhaltungen:
- EP-A- 1 134 565
- WO-A-00/07365
- WO-A-02/25741
- DE-A- 10 220 825

## Beschreibung

Die Erfindung betrifft eine Kamera, die eine Sensoranordnung mit einer Mehrzahl von in periodischen Gruppen angeordneten Sensoren zur Detektion elektromagnetischer Strahlung, darunter Sensoren eines ersten Typs zum Erfassen von Strahlung in einem infraroten Spektralbereich und Sensoren wenigstens eines zweiten Typs zum Erfassen von Licht in einem sichtbaren Spektralbereichumfasst. Die Erfindung betrifft auch ein Bildwiedergabesystem mit einer solchen Kamera und ein Fahrzeug mit einem solchen Bildwiedergabesystem. Die erfindungsgemäße Sensoranordnung ist dabei für den Einsatz in Nachtsichtgeräten, insbesondere in Parbnachtsichtgeräten, geeignet.

Heutzutage werden solche Nachtsichtgeräte verstärkt in Kraftfahrzeugen eingesetzt, um einem Fahrzeuglenker eine Orientierung bei Dunkelheit zu ermöglichen und das Erkennen von Objekten zu erleichtern. Nachtsichtgeräte umfassen Sensoren zur Erfassung von infraroter Strahlung, auch Infrarotsensoren genannt. Da es sich bei infraroter Strahlung um Wärmestrahlung handelt, wird von ihnen ein Bild erzeugt, bei dem Helligkeitsunterschiede unterschiedlichen Temperaturverteilungen dargestellter Objekte entsprechen. Aus diesem Grund erscheinen beispielsweise Verkehrsschilder und Hinweistafeln im vom Nachtsichtgerät gelieferten Bild als Flächen mit gleichförmiger Helligkeit, da diese Objekte in der Regel eine homogene Temperaturverteilung aufweisen. Eine auf Schildern und Hinweistafeln aufgebrachte Schrift kann daher auf einem vom Nachtsichtgerät erzeugten Bild nicht angezeigt erkannt werden. Um diesen Nachteil zu beheben, wurden Nachtsichtgeräte mit Farbkameras kombiniert, die Sensoren zur Erfassung von Strahlung in einem sichtbaren Spektralbereich aufweisen und ein Farbbild erzeugen. Das von den Infrarotsensoren aufgenommene Bild wird dabei mit dem Farbbild überlagert, so dass im überlagerten Bild Farbinformationen hell strahlender Objekte wiedergegeben werden, wodurch auch Schriften auf Hinweistafeln im kombinierten Bild sichtbar sind.

Aus der US 6,150,930 ist eine Sensoranordnung mit jeweils einer Mehrzahl von Sensoren von vier Typen zur Detektion elektromagnetischer Strahlung bekannt. Unter den Sensoren sind Sensoren eines ersten Typs zum Erfassen von Strahlung in einem infraroten Spektralbereich und Sensoren eines zweiten Typs zum Erfassen von Licht in einem roten Wellenlängenbereich, Sensoren eines dritten Typs zum Erfassen von Licht in einem grünen wellenlängenbereich und Sensoren eines vierten Typs zum Erfassen von Licht in einem blauen wellenlängenbereich des sichtbaren Spektralbereichs. In einem ebenfalls in US 6,150,930 beschriebenen Bildwiedergabesystem wird aus von den Sensoren des ersten Typs gelieferten Signalen ein Infrarotbild einer Szene erzeugt, und aus von den Sensoren des zweiten Typs bis vierten Typs gelieferten Signalen ein Farbbild derselben Szene. Infrarotbild und Farbbild werden miteinander zu einem kombinierten Bild der Szene verknüpft, wobei die vom Infrarotsensor eines Pixels erfasste Intensität die Leuchtdichte des Pixels im kombinierten Bild bestimmt. Pro Pixel des Bildes wird dabei jeweils mindestens ein Sensor von jedem der vier Typen benötigt, also mindestens vier Sensoren pro Pixel. Hierbei tritt das Problem auf, dass je mehr Sensoren zur Darstellung eines Pixels nötig sind, auch der Platzbedarf des Pixels auf der Sensoranordnung anwächst.

Aus DE 102 20 825 A1 ist eine Kamera bekannt, deren Bildaufnehmer im visuellen Wellenlängenbereich sensitive Pixel und im infraroten Wellenlängenbereich sensitive Pixel aufweist. Diese Kamera soll die Aufgaben einer Kamera für sichtbares Licht und einer Infrarotkamera erfüllen, d. h. "normale" Farbbilder oder Infrarotbilder liefern.

Da sich die zwei Typen von Bildern in ihrer Auflösung unterscheiden können, kann das Verhältnis der für sichtbares Licht und für Infrarot empfindlichen Pixel zueinander unterschiedlich gewählt werden.

EP 1 134 565 A1 offenbart insbesondere in ihrer Fig. 3 eine Sensoranordnung, in der für unterschiedliche Spektralbereiche empfindliche Sensoren in 4-er Gruppen angeordnet sind. Eine solche Vierergruppe enthält zwei für den sichtbaren Spektralbereich empfindliche Sensoren und zwei für unterschiedliche Bereiche des Infraroten empfindliche Sensoren. Die von den zwei Infrarotsensoren einer Gruppe erfassten Intensitäten werden zu einem Temperaturwert verarbeitet. Die Ortsauflösung der Sensoranordnung entspricht einem Pixel pro Vierergruppe.

Aus WO 02/25741 A2 ist eine Sensoranordnung mit Sensorelementen bekannt, die durch aufgesetzte Farbfilter für unterschiedliche Spektralbereiche empfindlich gemacht sind.

WO 00/07365 offenbart ein Farbbilderzeugungssystem mit einer Mehrzahl von in Gruppen angeordneten Sensoren, wobei jede Gruppe Sensoren für Rot, Grün, Blau und Infrarot enthält. Die Rot-, Grün- und Blau-Sensoren sprechen jedoch auch auf Infrarot an, so dass, um eine Farbkorrektur zu erzielen, die Ausgaben der Rot-, Grün- und Blau-Sensoren anhand eines vom Infrarotsensor gelieferten Wertes korrigiert werden.

Aufgabe der Erfindung ist es, eine Kamera bereit zu stellen, mit der sich aus Infrarot- und Farbinformation kombinierte Bilder einer Szene erzeugen lassen, die eine hohe Ortsauflösung bei geringen Abmessungen der Sensoranordnung ermöglicht.

Die Aufgabe wird durch eine Sensoranordnung mit den Merkmalen des Anspruchs 1 gelöst.

Gegenstand der Erfindung ist auch eine Kamera mit einer solchen Sensoranordnung sowie ein Bildwiedergabesystem mit einer solchen Kamera und ein Fahrzeug mit einem solchen Bildwiedergabesystem.

Bei der erfindungsgemäßen Sensoranordnung wird der bekannte Effekt ausgenutzt, wonach das menschliche Auge ungefähr zehn Mal sensitiver auf Helligkeitsunterschiede als auf Farbunterschiede reagiert. D.h. ein Betrachter nimmt zwischen zwei Bildern, von denen bei einem Helligkeit und Farbart gleich hoch aufgelöst sind, und einem zweiten, bei dem nur die Helligkeit die hohe Auflösung hat, und die Auflösung der Farbart deutlich geringer ist, keinen Qualitätsunterschied wahr.

Bei herkömmlichen Farbvideokameras, die nur im sichtbaren Spektralbereich arbeiten, ist dieser Effekt nicht nutzbar, denn um die Leuchtdichte jedes einzelnen Pixels eines Bildes zu bestimmen, muss die Helligkeit eines dem Pixel entsprechenden Punkts der Szene in drei Spektralbereichen, Rot, Grün und Blau, erfasst werden, so dass für jeden Pixel drei diesen Spektralbereichen entsprechende Sensoren vorgesehen sein müssen.

Wenn aber die Leuchtdichte des zu erzeugenden kombinierten Bildes nur von der im Infraroten erfassten Helligkeit abhängt, so genügt es, wenn die Sensoranordnung die Farben einer Szene mit einer geringeren Auflösung erfasst als ihre Helligkeit im Infraroten. Infolgedessen kann durch Weglassen nicht benötigter Sensoren für den sichtbaren Spektralbereich die für eine gegebene Pixelzahl erforderliche Ausdehnung der Sensoranordnung reduziert werden bzw. die mit einer gegebenen Ausdehnung der Sensoranordnung realisierbare Auflösung verbessert werden.

Besonders bevorzugt umfasst jede Gruppe zusätzlich Sensoren von einem dritten Typ und Sensoren von einem vierten Typ, wobei die Sensoren des zweiten bis vierten Typs sichtbares Licht in jeweils unterschiedlichen Wellenlängenbereichen detektieren. Mit einer solchen Sensoranordnung lassen sich beispielsweise Farben von Szenepunkten nach dem RGB-Modell darstellen, wenn beispielsweise die Sensoren des zweiten Typs Licht in einem roten Wellenlängenbereich, die Sensoren des dritten Typs Licht in einem grünen Wellenlängenbereich und die Sensoren des vierten Typs Licht in einem blauen Wellenlängenbereich detektieren.

Bevorzugterweise umfasst jede Gruppe je einen Sensor des zweiten bis vierten Typs. An Sensoren des ersten Typs können in jeder Gruppe insbesondere drei oder 4n+l Stück vorhanden sein, wobei n eine natürliche Zahl ist.

Eine Gruppe mit drei Sensoren des ersten Typs kann z. B. drei Pixel eines zu erzeugenden Bildes repräsentieren, wobei jedem Pixel in der Sensoranordnung die Fläche eines Sensors des ersten Typs und eines Sensors des zweiten, dritten oder vierten Typs entspricht. Eine aus den Erfassungsergebnissen der Sensoren des zweiten bis vierten Typs gewonnene Farbartinformation kann allen drei Pixeln der Gruppe zugeordnet werden, wohingegen die Leuchtdichte aller drei Pixel unterschiedlich sein kann.

Die Sensoranordnung kann auf einem Halbleitersubstrat hergestellt sein. In dem Halbleitersubstrat erzeugte optisch-elektrische Wandlerelemente sind vorzugsweise für alle vier Typen von Sensoren identisch; die einzelnen Typen unterscheiden sich lediglich in den Transmissionseigenschaften eines Filters, das das Halbleitersubstrat bedeckt.

Wird mit einer Kamera, die eine erfindungsgemäße Sensoranordnung umfasst, ein Bild aufgenommen, entspricht eine Gruppe mehreren Pixeln des Bildes. Beispielsweise kann jeder Sensor des ersten Typs jeweils einen Pixel repräsentieren. Dann ist die Leuchtdichte, mit der ein Pixel in dem Bild erscheint, vorzugsweise durch den vom zugeordneten Sensor des ersten Typs erfassten Helligkeitswert im Infraroten festgelegt, während die Farbart aller Pixel der Gruppe von den Helligkeitswerten ihrer Sensoren des zweiten bis vierten Typs abgeleitet ist.

Alternativ kann auch jedem einzelnen Sensor der Gruppe ein Pixel des Bildes entsprechen. Ein Pixel, dem ein Sensor des ersten Typs zugeordnet ist, erscheint im Bild mit einer Leuchtdichte, die durch den von dem betreffenden Sensor im Infraroten erfassten Helligkeitswert bestimmt ist. Bei einem Pixel, dem ein Sensor des zweiten, dritten oder vierten Typs zugeordnet ist, ist die Leuchtdichte durch den von wenigstens einem benachbarten Sensor des ersten Typs erfassten Helligkeitswert im Infraroten bestimmt. Die Farbart aller Pixel der Gruppe ist von von den Pixeln des zweiten bis vierten Typs der Gruppe erfassten Helligkeitswerten im sichtbaren Spektralbereich abgeleitet.

Ein Bildwiedergabesystem mit einer Kamera, die eine erfindungsgemäße Sensoranordnung aufweist, umfasst bevorzugterweise einen Anzeigeschirm zum Anzeigen des von der Kamera gelieferten Bildes.

Nachfolgend wird die Erfindung anhand von Zeichnungen näher erläutert.

Dabei zeigen:
- Fig. 1: ein Bildwiedergabesystem in vereinfachter Darstellung;
- Fig. 2: einen prinzipiellen Aufbau eines Ausschnitts einer erfindungsgemäßen Sensoranordnung;
- Fig. 3: einen Querschnitt durch den in Figur 2 dargestellten Ausschnitt;
- Fig. 4: einen prinzipiellen Aufbau eines Ausschnitts einer weiteren erfindungsgemäßen Sensoranordnung; und
- Fig. 5: eine Gruppe einer weiteren erfindungsgemäßen Sensoranordnung.

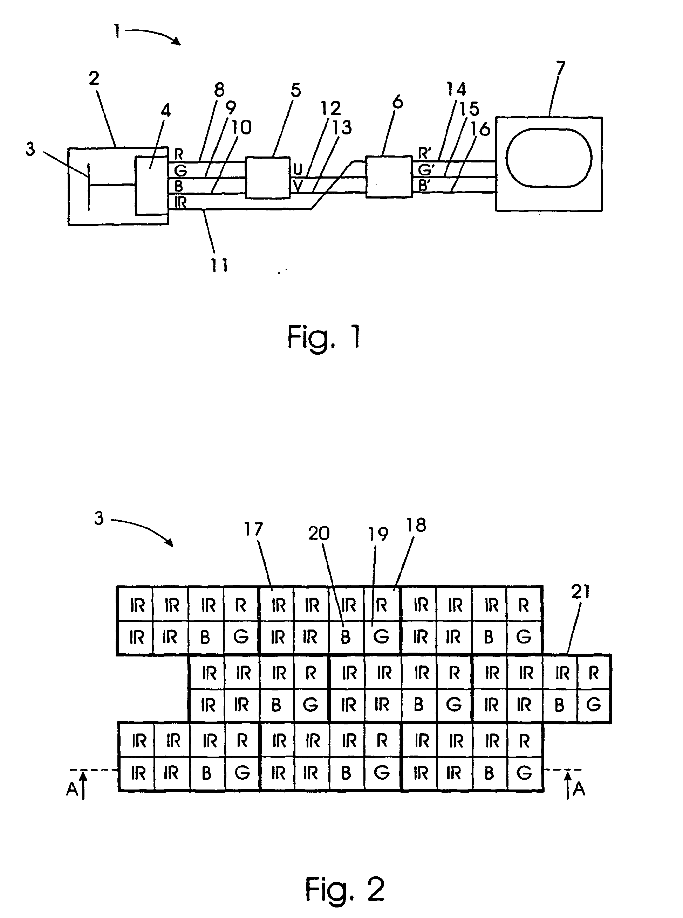

Ein erfindungsgemäßes Bildwiedergabesystem 1 ist in Figur 1 vereinfacht dargestellt. Zum Bildwiedergabesystem 1 gehören eine Kamera 2 mit Sensoranordnung 3 und Zuordnungselektronik 4, eine erste Matrix 5, eine zweite Matrix 6 und ein Monitor 7. Von der Kamera 2 führen ein R-Videokanal 8, ein G-Videokanal 9 und ein B-Videokanal zur Matrix 5. Ein IR-Videokanal 11 führt von der Kamera 2 zur Matrix 6. Ferner führen ein U-Videokanal 12 und ein V-Videokanal 13 von der Matrix 5 zur Matrix 6. Von der Matrix 6 führen ein R'-Videokanal 14, ein G'-Videokanal 15 und ein B'-Videokanal 16 zum Monitor 7.

Figur 2 zeigt einen prinzipiellen Aufbau eines Ausschnitts der Sensoranordnung 3. Diese umfasst IR-Sensoren 17 zum Erfassen von Strahlung in einem infraroten Spektralbereich, R-Sensoren 18 zum Erfassen von Licht in einem roten Wellenlängenbereich, G-Sensoren 19 zum Erfassen von Licht in einem grünen Wellenlängenbereich und B-Sensoren 20 zum Erfassen von Licht in einem blauen Wellenlängenbereich. Jeweils acht Sensoren 17, 18, 19, 20 bilden eine Gruppe 21, wobei die Gruppe 21 fünf IR-Sensoren 17 und je einen R-Sensor 18, einen G-Sensor 19 und einen B-Sensor 20 umfasst. Identische Gruppen 21 sind über einer Fläche der Sensoranordnung 3 periodisch angeordnet.

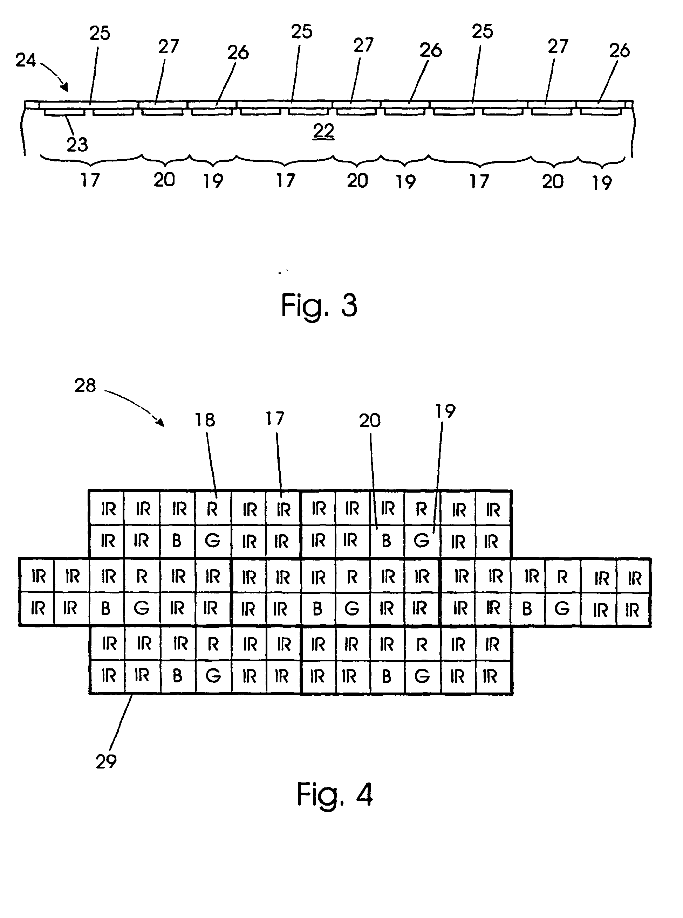

Ein Querschnitt durch die in Figur 2 gezeigte Sensoranordnung 3 entlang der in Fig. 2 gestrichelten Linie A-A ist in Figur 3 gezeigt. Alle Sensoren 17, 18, 19, 20 umfassen identische auf einem Substrat 22 hergestellte optisch-elektrische Wandlerelemente 23. Ein Filter 24 deckt die optisch-elektrischen Wandlerelemente 23 ab. Der Filter 24 weist IR-Transparenzbereiche 25, die durchlässig sind für elektromagnetische Strahlung in einem infraroten Spektralbereich, G-Transparenzbereiche 26, die durchlässig sind für sichtbares Licht im grünen Wellenlängenbereich und B-Transparenzbereiche 27, die durchlässig sind für sichtbares Licht im blauen Wellenlängenbereich. Filter 24 weist ferner R-Transparenzbereiche auf, die durchlässig sind für sichtbares Licht im roten Wellenlängenbereich, die jedoch in der Darstellung der Figur 3 nicht sichtbar sind. Den Transparenzbereichen 25, 26, 27 sind eines oder mehrere der optisch-elektrischen Wandlerelemente 23 zugeordnet.

Aufgrund der spezifischen Durchlässigkeit der Transparenzbereiche 25, 26, 27 für jeweils unterschiedliche Wellenlängenbereiche elektromagnetischer Strahlung sind die ihnen zugeordneten optisch-elektrischen Wandlerelemente 23 sensitiv für diesen Wellenlängenbereich. Somit bilden optisch-elektrische Wandlerelemente 23, die einem IR-Transparenzbereich 25 zugeordnet sind, IR-Sensoren 11, Wandlerelemente 23, die einem G-Transparenzbereich 26 zugeordnet sind, G-Sensoren 19, Wandlerelemente 23, die einem B-Transparenzbereich 27 zugeordnet sind, B-Sensoren 20 und Wandlerelemente 23, die einem R-Transparenzbereich zugeordnet sind, R-Sensoren 18.

Mit dem Bildwiedergabesystem 1 lässt sich auf dem Monitor 7 ein aus Pixeln aufgebautes Bild wiedergeben, das von der Kamera 2 aufgenommen worden ist. Dabei ist jedes Pixel des Bildes durch jeweils einen der Sensoren 17, 18, 19, 20 repräsentiert.

Bei der Aufnahme liefern die IR-Sensoren 17 je einen infraroten Helligkeitswert, die R-Sensoren 18 je einen roten Helligkeitswert, die G-Sensoren 19 je einen grünen Helligkeitswert und die B-Sensoren 20 je einen blauen Helligkeitswert, so dass jedem Pixel ursprünglich ein von dem ihn repräsentierenden Sensor 17, 18, 19, 20 gelieferter entsprechender Helligkeitswert zugeordnet ist. Die Zuordnungselektronik 4 ordnet nun innerhalb jeder Gruppe 21 allen von den IR-Sensoren 17 dieser Gruppe 21 repräsentierten Pixeln den vom jeweiligen R-Sensor 18 gelieferten roten Helligkeitswert, den vom jeweiligen G-Sensor 19 gelieferten grünen Helligkeitswert und den vom jeweiligen B-Sensor 20 gelieferten blauen Helligkeitswert zu. Sie ordnet auch dem vom R-Sensor 18 repräsentierten Pixel den vom G-Sensor 19 gelieferten grünen Helligkeitswert und den vom B-Sensor 20 gelieferten blauen Helligkeitswert, dem vom G-Sensor 19 repräsentierten Pixel den vom R-Sensor 18 gelieferten roten Helligkeitswert und den vom B-Sensor 20 gelieferten blauen Helligkeitswert und dem vom B-Sensor 20 repräsentierten Pixel den vom R-Sensor 18 gelieferten roten Helligkeitswert und dem vom G-Sensor 19 gelieferten grünen Helligkeitswert zu. Ferner wird den von den R-Sensoren 18, den von den G-Sensoren 19 und den von den B-Sensoren 20 repräsentierten Pixeln ein von einem benachbarten IR-Sensor 17 gelieferter infraroter Helligkeitswert zugeordnet. Die Zuordnungselektronik 4 sorgt dafür, dass jedem Pixel des Bildes ein infraroter Helligkeitswert, ein roter Helligkeitswert, ein grüner Helligkeitswert und ein blauer Helligkeitswert zugeordnet ist.

Alternativ zur beschriebenen Weise der Zuordnung der Helligkeitswerte ist es beispielsweise auch möglich, aus den von den fünf IR-Sensoren 17 gelieferten fünf infraroten Helligkeitswerten einen mittleren infraroten Helligkeitswert zu bilden und diesen den durch den R-Sensor 18, den G-Sensor 19 und den B-Sensor 20 repräsentierten Pixeln zuzuordnen. Denkbar ist auch, den einem Pixel, dem ein R-, G- oder B-Sensor entspricht, zuzuordnenden infraroten Helligkeitswertwert aus den infraroten Helligkeitswerten zu mitteln, die von dem Sensor 18, 19, 20 dieses Pixels benachbarten IR-Sensoren 17 geliefert werden, wobei diese benachbarten IR-Sensoren 17 auch zu einer anderen Gruppe als das betreffende Pixel gehören dürfen.

Über den R-Videokanal 8, den G-Videokanal 9 und den B-Videokanal 10 werden der rote, grune und blaue Helligkeitswert jedes Pixels von der Kamera 2 an die Matrix 5 ausgegeben. Der infrarote Helligkeitswert jedes Pixels wird über den IR-Videokanal 11 von der Kamera 2 an die Matrix 6 ausgegeben.

Die Matrix 5 transformiert die jeweils durch rote, grüne und blaue Helligkeitswerte definierte Farbe jedes Pixels in die an sich bekannte YUV-Darstellung, in der ein Y-Signal die Leuchtdichte und U- und V-Signale die Farbart jedes Pixels spezifizieren, und gibt diese letzteren über den U-Videokanal 12 und den V-Videokanal 13 an die Matrix 6 aus.

Die Matrix 6 führt die zur Transformation der Matrix 5 inverse Transformation aus, wobei sie die Farbartsignale U, V der Matrix 5 als U-, V-Eingangssignale und als Leuchtdichte-Eingangssignal die auf dem IR-Videokanal 11 übertragenen infraroten Helligkeitswerte verwendet und für jedes Pixel einen neuen roten, grünen und blauen Helligkeitswert erzeugt. Diese neuen roten, grünen und blauen Helligkeitswerte jedes Pixels werden über den R'-Videokanal 14, den G'-Videokanal 15 und den B'-Videokanal 16 an den Monitor 7 übergeben, welcher das Pixel mit diesen neuen Helligkeitswerten darstellt. Somit entsteht ein durchgängig farbiges Bild, bei dem die Leuchtdichte jedes Pixels durch die infraroten Helligkeitswerte bestimmt ist, die Farbart aber die gleiche bleibt, die auch das menschliche Auge sieht. Dies macht es dem Betrachter besonders einfach, Gegenstände in dem kombinierten Bild wiederzuerkennen.

Dabei ist die Erfindung ist nicht auf die in Fig. 2 gezeigte Sensoranordnung 3 beschränkt. So zeigt Fig. 4 eine weitere erfindungsgemäße Sensoranordnung 28 mit periodisch angeordneten Gruppen 29. Jede Gruppe 29 umfasst neun IR-Sensoren 17 und je einen R-Sensor 18, einen G-Sensor 19 und einen B-Sensor 20. Die Sensoranordnung 28 weist insgesamt eine noch größere Ausdünnung der Sensoren 18, 19, 20 auf als die Sensoranordnung 3.

Die Gruppen 29 können pro Sensor 17, 18, 19, 20 ein Pixel, also insgesamt zwölf Pixel repräsentieren. Zwischen zwei Vierergruppen von IR-Sensoren 17, die jeweils an Ecken eines Quadrats angeordnet sind, befinden sich je ein IR-Sensor 17 sowie ein R-Sensor 18, ein G-Sensor 19 und ein B-Sensor 20, die ebenfalls an den Ecken eines Quadrats angeordnet sind. Von der Zuordnungselektronik 4 einer mit einer solchen Sensoranordnung 28 ausgestatteten Kamera 2 wird den durch die neun IR-Sensoren 17 repräsentierten neun Pixeln ein von dem jeweiligen IR-Sensor 17 gelieferter infraroter Helligkeitswert zugeordnet. Ebenso werden diesen von den Sensoren 18, 19, 20 gelieferte rote, grüne und blaue Helligkeitswerte zugeordnet. Die durch die mittleren Sensoren 18, 19, 20 repräsentierten Pixel erhalten die von diesen drei Sensoren 18, 19, 20 gelieferten jeweiligen Helligkeitswerte. Ferner wird aus den von den neun IR-Sensoren 17 gelieferten neun infraroten Helligkeitswerte ein mittlerer infraroter Helligkeitswert gebildet, welcher den von den drei Sensoren 18, 19, 20 repräsentierten drei Pixeln zugeordnet wird.

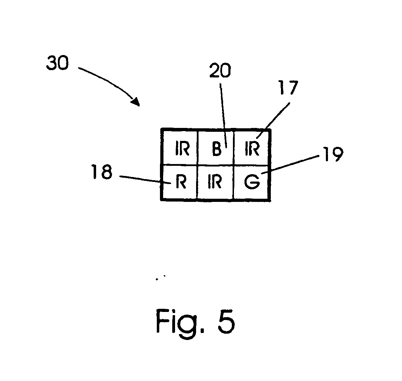

Schließlich zeigt Fig. 5 eine Gruppe 30 einer weiteren erfindungsgemäßen Sensoranordnung. Die Gruppe 30 umfasst drei IR-Sensoren 17 sowie je einen R-Sensor 18, G-Sensor 19 und B-Sensor 20. Sie repräsentiert drei Pixel, denen jeweils ein IR-Sensor 17 und einer der Sensoren 18, 19, 20 entspricht. In der Zuordnungselektronik 4 werden jedem Pixel die beiden von seinen eigenen Sensoren 17 und 18, 19 oder 20 gelieferten Helligkeitswerte, also ein infraroter Helligkeitswert sowie je nach Sensor 18, 19, 20 ein roter oder ein grüner oder ein blauer Helligkeitswert sowie die in den zwei anderen Pixeln erhaltenen roten, blauen oder grünen Helligkeitswerte zugeordnet. Somit wird auch bei einer Kamera mit einer Sensoranordnung mit Gruppen 30 jedes Pixel durch einen infraroten Helligkeitswert und einen roten, grünen und blauen Helligkeitswert repräsentiert, wobei allerdings die Ortsauflösung der Kamera 2 im Infraroten dreimal so hoch wie im sichtbaren Spektralbereich ist.

## Patentansprüche

1. Kamera mit einer Sensoranordnung (3, 28), die eine Mehrzahl von in periodischen Gruppen (21, 29, 30) angeordneten Sensoren (17, 18, 19, 20) zur Detektion elektromagnetischer Strahlung, darunter Sensoren (17) eines ersten Typs zum Erfassen von Strahlung in einem infraroten Spektralbereich und Sensoren (18, 19, 20) eines zweiten bis vierten Typs zum Erfassen von Licht in jeweils unterschiedlichen Teilen des sichtbaren Spektralbereichs, umfasst
**dadurch gekennzeichnet,**
**dass** jeweils eine Gruppe (21, 29, 30) mehrere Pixel eines von der Kamera gelieferten kombinierten Bildes repräsentiert, dass in jeder Gruppe (21, 29, 30) die Anzahl der Sensoren (17) des ersten Typs die Anzahl der Sensoren (18, 19, 20) des zweiten bis vierten Typs übertrifft, dass die Leuchtdichte jedes Pixels einer Gruppe (21, 29, 30) von wenigstens einem von einem Sensor (17) des ersten Typs einer Gruppe (21, 29, 30) erfassten Helligkeitswert im Infraroten bestimmt ist, und dass die Farbart jedes Pixels dieser Gruppe (21, 29, 30) von den von den Sensoren (18, 19, 20) des zweiten bis vierten Typs dieser Gruppe (21, 29, 30) abgeleiteten Helligkeitswerten abgeleitet ist.

2. Kamera nach Anspruch 1,
**dadurch gekennzeichnet,**
**dass** die Sensoren (18) des zweiten Typs Licht in einem roten Wellenlängenbereich, die Sensoren (19) des dritten Typs Licht in einem grünen Wellenlängenbereich und die Sensoren (20) des vierten Typs Licht in einem blauen Wellenlängenbereich detektieren.

3. Kamera nach einem der vorhergehenden Ansprüche,
**dadurch gekennzeichnet,**
**dass** jede Gruppe (21, 29, 30) je einen Sensor (18, 19, 20) des zweiten bis vierten Typs umfasst.

4. Kamera nach Anspruch 3,
**dadurch gekennzeichnet,**
**dass** eine Gruppe (30) drei Sensoren des ersten Typs und je einen Sensor des zweiten bis vierten Typs aufweist.

5. Kamera nach Anspruch 3,
**dadurch gekennzeichnet,**
**dass** eine Gruppe (21, 29) 4n+1 Sensoren des ersten Typs mit n=1, 2, ..., und je einen Sensor des zweiten bis vierten Typs aufweist.

6. Kamera nach einem der vorhergehenden Ansprüche,
**dadurch gekennzeichnet,**
**dass** sie auf einem Halbleitersubstrat (22) hergestellt ist.

7. Kamera nach Anspruch 6,
**dadurch gekennzeichnet,**
**dass** Sensoren (17, 18, 19, 20) aller Typen identische lichtempfindliche optisch-elektrische Wandlerelemente (23) aufweisen und die Sensoranordnung (3, 28) einen Filter (24) mit je nach Typ des Sensors (17, 18, 19, 20) unterschiedlicher spektraler Transmission aufweist.

8. Kamera nach einem der vorhergehenden Ansprüche,
**dadurch gekennzeichnet,**
**dass** jede Gruppe (21, 29, 30) so viele Pixel repräsentiert, wie sie Sensoren (17) des ersten Typs umfasst, und dass die Leuchtdichte jedes Pixels durch den von genau einem dem Pixel zugeordneten Sensor (17) des ersten Typs erfassten Helligkeitswert im Infraroten bestimmt ist.

9. Kamera nach einem der Ansprüche 1-7,
**dadurch gekennzeichnet,**
**dass** jede Gruppe (21, 29, 30) so viele Pixel repräsentiert, wie sie Sensoren (17, 18, 19, 20) des ersten bis vierten Typs umfasst, dass die Leuchtdichte jedes einem Sensor (17) des ersten Typs zugeordneten Pixels durch den von diesem Sensor (17) des ersten Typs erfassten Helligkeitswert im Infraroten bestimmt ist, und dass die Leuchtdichte jedes einem Sensor (18, 19, 20) des zweiten bis vierten Typs zugeordneten Pixels durch den von wenigstens einem zu diesem Sensor (18, 19, 20) benachbarten Sensor (17) des ersten Typs erfassten Helligkeitswert im Infraroten bestimmt ist.

10. Bildwiedergabesystem (1) mit einer Kamera (2) nach einem der vorhergehenden Ansprüche,
**dadurch gekennzeichnet,**
**dass** es einen Anzeigeschirm (7) zum Anzeigen des von der Kamera (2) gelieferten Bildes umfasst.

11. Fahrzeug mit einem Bildwiedergabesystem nach Anspruch 10.

## Claims

1. Camera having a sensor arrangement (3, 28) comprising a plurality of sensors (17, 18, 19, 20) arranged in periodic groups (21, 29, 30) and serving for the detection of electromagnetic radiation, including sensors (17) of a first type for detecting radiation in an infrared spectral range and sensors (18, 19, 20) of a second to fourth type for detecting light in each case in different parts of the visible spectral range,
**characterized**
**in that** a respective group (21, 29, 30) represents a plurality of pixels of a combined image supplied by the camera, in that, in each group (21, 29, 30), the number of sensors (17) of the first type exceeds the number of sensors (18, 19, 20) of the second to fourth type, in that the luminance of each pixel of a group (21, 29, 30) is determined by at least one brightness value in the infrared as is detected by a sensor (17) of the first type of the said group (21, 29, 30), and in that the chromaticity of each pixel of the said group (21, 29, 30) is derived from the brightness values derived from the sensors (18, 19, 20) of the second to fourth type of the said group (21, 29, 30).

2. Camera according to Claim 1,
**characterized**
**in that** the sensors (18) of the second type detect light in a red wavelength range, the sensors (19) of the third type detect light in a green wavelength range and the sensors (20) of the fourth type detect light in a blue wavelength range.

3. Camera according to one of the preceding claims,
**characterized**
**in that** each group (21, 29, 30) in each case comprises one sensor (18, 19, 20) of the second to fourth type.

4. Camera according to Claim 3,
**characterized**
**in that** a group (30) has three sensors of the first type and in each case one sensor of the second to fourth type.

5. Camera according to Claim 3,
**characterized**
**in that** a group (21, 29) has 4n + 1 sensors of the first type, where n = 1, 2,... and in each case one sensor of the second to fourth type.

6. Camera according to one of the preceding claims,
**characterized**
**in that** it is produced on a semiconductor substrate (22).

7. Camera according to Claim 6,
**characterized**
**in that** sensors (17, 18, 19, 20) of all types have identical light-sensitive optical-electrical transducer elements (23) and the sensor arrangement (3, 28) has a filter (24) with a spectral transmission that differs depending on the type of sensor (17, 18, 19, 20).

8. Camera according to one of the preceding claims,
**characterized**
**in that** each group (21, 29, 30) represents as many pixels as it comprises sensors (17) of the first type, and in that the luminance of each pixel is determined by the brightness value in the infrared that is detected by precisely one sensor (17) of the first type assigned to the pixel.

9. Camera according to one of Claims 1 - 7,
**characterized**
**in that** each group (21, 29, 30) represents as many pixels as it comprises sensors (17, 18, 19, 20) of the first to fourth type, in that the luminance of each pixel assigned to a sensor (17) of the first type is determined by the brightness value in the infrared that is detected by the said sensor (17) of the first type, and in that the luminance of each pixel assigned to a sensor (18, 19, 20) of the second to fourth type is determined by the brightness value in the infrared that is detected by at least one sensor (17) of the first type adjacent to the said sensor (18, 19, 20).

10. Image reproduction system (1) having a camera (2) according to one of the preceding claims,
**characterized**
**in that** it comprises a display screen (7) for displaying the image supplied by the camera (2).

11. Vehicle having an image reproduction system according to Claim 10.

## Revendications

1. Caméra avec un dispositif capteur (3, 28) comportant une pluralité de capteurs (17, 18, 19, 20) disposés en groupes périodiques (21, 29, 30) pour la détection de rayonnement électromagnétique, comprenant des capteurs (17) d'un premier type pour l'enregistrement de rayonnement dans une plage spectrale infrarouge et des capteurs (18, 19, 20) d'un deuxième à un quatrième type pour l'enregistrement de la lumière dans des parties respectivement différentes de la plage visible du spectre, **caractérisée en ce qu'**un groupe (21, 29, 30) représente respectivement plusieurs pixels d'une image combinée fournie par la caméra, **en ce que** dans chaque groupe (21, 29, 30) le nombre de capteurs (17) du premier type dépasse le nombre de capteurs (18, 19, 20) du deuxième au quatrième type, **en ce que** la densité de la lumière de chaque pixel d'un groupe (21, 29, 30) est définie par au moins une valeur de luminance enregistrée en infrarouge par un capteur (17) du premier type de ce groupe (21, 29, 30), et **en ce que** la nature de la couleur de chaque pixel de ce groupe (21, 29, 30) découle des valeurs de lumière qui découlent des capteurs (18, 19, 20) du deuxième au quatrième type de ce groupe (21, 29, 30).

2. Caméra selon la revendication 1, **caractérisée en ce que** les capteurs (18) du deuxième type détectent la lumière dans une plage rouge de longueurs d'ondes, les capteurs (19) du troisième type détectent la lumière dans une plage verte de longueurs d'ondes et les capteurs (20) du quatrième type détectent la lumière dans une plage bleue de longueurs d'ondes.

3. Caméra selon une des revendications précédentes, **caractérisée en ce que** chaque groupe (21, 29, 30) comporte chacun un capteur (18, 19, 20) du deuxième au quatrième type.

4. Caméra selon la revendication 3, **caractérisée en ce qu'**un groupe (30) possède trois capteurs du premier type et chacun un capteur du deuxième au quatrième type.

5. Caméra selon la revendication 3, **caractérisée en ce qu'**un groupe (21, 29) possède 4n+1 capteurs du premier type avec n=1, 2, ..., et chacun un capteur du deuxième au quatrième type.

6. Caméra selon une des revendications précédentes, **caractérisée en ce qu'**elle est fabriquée sur un substrat semi-conducteur (22).

7. Caméra selon la revendication 6, **caractérisée en ce que** les capteurs (17, 18, 19, 20) de tous les types possèdent des éléments convertisseurs optoélectriques (23) sensibles à la lumière identiques et **en ce que** le dispositif capteur (3, 28) possède un filtre (24) avec des transmission spectrales différentes selon le type du capteur (17, 18, 19, 20).

8. Caméra selon une des revendications précédentes, **caractérisée en ce que** chaque groupe (21, 29, 30) représente autant de pixels qu'il comporte de capteurs (17) du premier type, et **en ce que** la densité de lumière de chaque pixel est définie par la valeur de la lumière enregistrée en infrarouge par exactement un capteur (17) du premier type attribué au pixel.

9. Caméra selon une des revendications 1 - 7, **caractérisée en ce que** chaque groupe (21, 29, 30) représente autant de pixels qu'il comporte de capteurs (17, 18, 19, 20) du premier au quatrième type, **en ce que** la densité de lumière de chaque pixel attribué à un capteur (17) du premier type est définie par la valeur de la lumière enregistrée en infrarouge par ce capteur (17) du premier type, et **en ce que** la densité de lumière de chaque pixel attribué à un capteur (18, 19, 20) du deuxième au quatrième type est définie par la valeur de la lumière enregistrée en infrarouge par au moins un capteur (17) du premier type voisin de ces capteurs (18, 19, 20).

10. Système de reproduction d'image (1) avec une caméra (2) selon une des revendications précédentes, **caractérisé en ce qu'**il comporte un écran d'affichage (7) pour l'affichage de l'image fournie par la caméra (2).

11. Véhicule avec un système de reproduction d'image selon la revendication 10.
